# EUROPEAN PATENT APPLICATION

(11) **EP 4 836 060 A1**
(43) Date of publication of application: **04.11.2026**
(21) Application number: 24910565.1
(22) Date of filing: 03.12.2024
(51) Int. Cl.: H01M 10/0569, H01M 10/0566, H01M 10/0525

(54) **ELECTROLYTE AND LITHIUM-ION BATTERY**

(30) Priority: 27.12.2023 CN 202311810416; 27.12.2023 CN 202311810418
(71) Applicant: Zhangjiagang Guotai-Huarong New Chemical Materials Co., Ltd, Suzhou, Jiangsu 215600 (CN)
(72) Inventor: YU, Linpo, Suzhou, Jiangsu 215600 (CN); ZHAO, Xintao, Suzhou, Jiangsu 215600 (CN); XU, Kaichen, Suzhou, Jiangsu 215600 (CN); WANG, Zhitao, Suzhou, Jiangsu 215600 (CN); SHI, Erbo, Suzhou, Jiangsu 215600 (CN); GAN, Chaolun, Suzhou, Jiangsu 215600 (CN)
(74) Representative: Bryers Intellectual Property Ltd
(86) International application number: PCT/CN2024/136399
(87) International publication number: WO 2025/139633

(57) **Abstract**

An electrolyte and a lithium-ion battery, which mainly solve the problem of poor compatibility of an electrolyte, which takes a phosphate ester as a main solvent, and a graphite negative electrode in the prior art. The electrolyte comprises a lithium salt, an additive and an organic solvent, wherein the organic solvent comprises a cyclic ester and a chain ester. The mass ratio of the chain ester in the electrolyte is greater than that of the cyclic ester; and the chain ester comprises a phosphate ester and a linear ester. The structural formula of the phosphate ester is formula (I), wherein R is selected from a mono-fluoro- or poly-fluoro-substituted saturated or unsaturated aliphatic hydrocarbon, or a mono-fluoro- or poly-fluoro-substituted aromatic hydrocarbon. The linear ester is one or more of a chain carbonate, a chain carboxylate ester and a fluorinated carboxylate ester. The compatibility of a phosphate ester electrolyte and a graphite negative electrode is improved, thereby prolonging the cycle life of a battery.

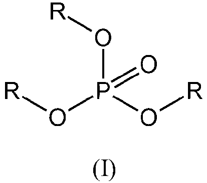

## Description

### Technical Field of the Invention

The present invention relates to the technical field of batteries, and in particular to an electrolyte and a lithium-ion battery.

### Background of the Invention

Lithium-ion batteries are currently the main electrochemical energy-storage means in battery application fields such as large-scale energy storage, electric vehicles and consumer electronics. At present, the most widely used principal solvent systems are still mainly based on carbonate solvents, such as binary or ternary mixed solvents based on ethylene carbonate (EC), which has a large dielectric constant, in which a chain carbonate (dimethyl carbonate (DMC), diethyl carbonate (DEC), ethyl methyl carbonate (EMC)), a carboxylate ester or an ether serves as a co-solvent. These commonly used solvents have characteristics such as good solubility with lithium salts, high electrolyte conductivity, and the ability to form a stable SEI film at the positive and negative electrodes, and are therefore regarded as the best choice for lithium-ion battery electrolyte systems, and in particular as the electrolyte solvent for electric-vehicle battery. However, these solvents are all highly flammable, so that in actual use, attention must be paid to the safety of the battery.

In order to prevent the electrolyte of a lithium-ion battery from decomposing and triggering a chain reaction and thus burning due to various forms of abuse, in the past most researchers mostly adopted the approach of adding a flame-retardant additive. Various phosphate esters were frequently added as flame-retardant additives to lithium-ion battery electrolytes to improve the safety performance of lithium-ion batteries. It is generally believed that adding a large amount of phosphate ester additive (5% or more) to a lithium-ion battery electrolyte, although it can improve the safety performance of the battery, will have a negative effect on battery performance. One approach to solving this problem is to find a more efficient safety additive; another approach is to directly use a phosphate ester as the main solvent of the lithium-ion battery electrolyte. Although a phosphate ester used as the main solvent can, at the positive-electrode side, even be matched with a 4.5 V lithium-rich positive electrode material and thus has great application potential, it has poor compatibility with the graphite negative electrode in current mainstream lithium-ion batteries.

### Summary of the Invention

An object of the present invention is to provide an electrolyte and a lithium-ion battery, the electrolyte being capable of improving the compatibility between a phosphate ester solvent and a graphite negative electrode, thereby improving the cycle life of the lithium-ion battery.

To achieve the above object, the technical solution adopted by the present invention is as follows:
A first aspect of the present invention provides an electrolyte, comprising a lithium salt, an additive and an organic solvent, wherein the organic solvent comprises a cyclic ester and a chain ester, and the mass proportion of the chain ester in the electrolyte is greater than that of the cyclic ester;
the chain ester comprises a phosphate ester and a linear ester;
the structural formula of the phosphate ester is 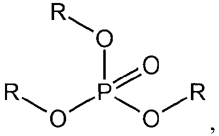 wherein R is selected from a mono-fluoro- or poly-fluoro-substituted saturated or unsaturated aliphatic hydrocarbon, or a mono-fluoro- or poly-fluoro-substituted aromatic hydrocarbon;
the linear ester is one or more of a chain carbonate, a chain carboxylate ester and a fluorinated carboxylate ester.

By adding a phosphate ester, the present invention improves the safety performance of the battery; through the combined use of the phosphate ester, the linear ester and the cyclic ester, the compatibility between the phosphate ester and the graphite negative electrode is improved, and the cycle life of the battery is enhanced.

According to some specific embodiments, R is selected from a mono-fluoro- or poly-fluoro-substituted saturated aliphatic hydrocarbon having 1 to 8 carbon atoms.

Further, R is selected from a mono-fluoro- or poly-fluoro-substituted saturated aliphatic hydrocarbon having 1 to 5 carbon atoms.

Still further, R is selected from a mono-fluoro- or poly-fluoro-substituted saturated aliphatic hydrocarbon having 1 to 3 carbon atoms.

Yet further, R is a mono-fluoro- or poly-fluoro-substituted ethyl group.

According to some more specific embodiments, the phosphate ester is selected from one or more of

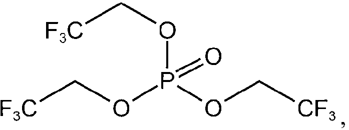

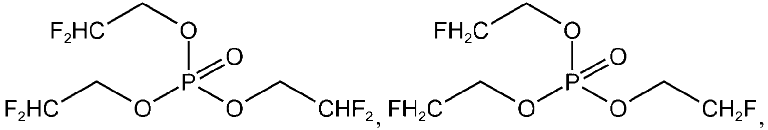

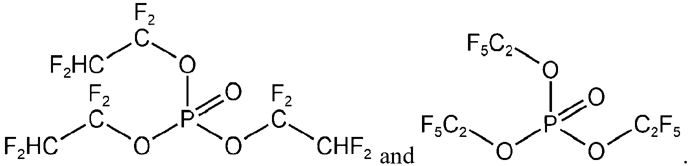

According to some specific embodiments, the chain carbonate is selected from one or more of dimethyl carbonate, ethyl methyl carbonate, diethyl carbonate and methyl propyl carbonate.

According to some specific embodiments, the chain carboxylate ester is selected from one or more of methyl propionate, ethyl propionate, propyl propionate, methyl acetate, ethyl acetate, propyl acetate, methyl butyrate, ethyl butyrate and propyl butyrate.

According to some specific embodiments, the fluorinated carboxylate ester is selected from one or more of fluorinated methyl propionate, fluorinated ethyl propionate and fluorinated ethyl acetate.

Further, the fluorinated carboxylate ester is 2,2-difluoroethyl acetate (DFEA, CAS: 1550-44-3).

According to some specific embodiments, the cyclic ester is selected from one or more of γ-butyrolactone, ethylene carbonate, propylene carbonate and fluoroethylene carbonate.

According to some specific embodiments, the molar ratio of the phosphate ester to the linear ester is 3:(1 to 12).

According to some specific embodiments, the molar ratio of the phosphate ester to the linear ester is 1:(0.5 to 4). By further optimizing the ratio of the phosphate ester to the linear ester, the present invention further enhances the cycle life of the battery.

Further, the molar ratio of the phosphate ester to the linear ester is 1:(2 to 4), for example 1:2, 1:2.5, 1:3, 1:3.5 or 1:4.

According to some specific embodiments, the cyclic ester accounts for 5 to 20% of the total mass of the electrolyte. Further, the cyclic ester accounts for 5 to 15% of the total mass of the electrolyte. Still further, the mass proportion of the cyclic ester in the electrolyte is 8 to 12%.

According to some specific embodiments, the lithium salt comprises one or more of lithium hexafluorophosphate, lithium tetrafluoroborate, lithium hexafluoroarsenate, anhydrous lithium perchlorate, lithium bis(trifluoromethanesulfonyl)imide, lithium difluorobis(oxalato)phosphate, lithium difluorophosphate, lithium trifluoromethanesulfonate, lithium difluorobis(oxalato)phosphate, lithium bis(oxalato)borate, lithium difluoro(oxalato)borate and lithium bis(fluorosulfonyl)imide.

According to some specific embodiments, the concentration of the lithium salt in the electrolyte is 0.6 to 1.8 mol/L. Further, the concentration of the lithium salt in the electrolyte is 0.8 to 1.2 mol/L.

According to some more specific embodiments, the lithium salt is lithium hexafluorophosphate or lithium bis(oxalato)borate.

According to some other more specific embodiments, the lithium salt is lithium hexafluorophosphate, or lithium bis(fluorosulfonyl)imide, or a combination of lithium hexafluorophosphate and lithium bis(fluorosulfonyl)imide.

According to some specific embodiments, the additive comprises one or more of 3-phenyl-1,4,2-dioxazol-5-one, vinylene carbonate, 1,3-propane sultone, prop-1-ene-1,3-sultone, ethylene sulfate, propylene sulfate, 1,4-butane sultone and lithium difluorophosphate.

According to some specific embodiments, the additive accounts for 0.1 to 2% of the total mass of the electrolyte, for example 0.1%, 0.5%, 1%, 1.5% or 2%.

According to a first more specific embodiment, the electrolyte comprises a lithium salt, an additive and an organic solvent, the organic solvent comprises a cyclic ester and a chain ester, and the mass proportion of the chain ester in the electrolyte is greater than that of the cyclic ester,
the chain ester comprises a first chain ester (phosphate ester) and a second chain ester, the structural formula of the first chain ester is 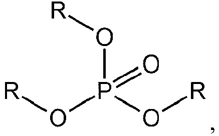 wherein R is selected from a mono-fluoro- or poly-fluoro-substituted saturated or unsaturated aliphatic hydrocarbon, or a mono-fluoro- or poly-fluoro-substituted aromatic hydrocarbon;
the second chain ester is a chain carbonate and/or a chain carboxylate ester, and the chain carboxylate ester is selected from one or more of methyl propionate, ethyl propionate, propyl propionate, methyl acetate, ethyl acetate, propyl acetate, methyl butyrate, ethyl butyrate and propyl butyrate;
the molar ratio of the first chain ester (i.e. the phosphate ester) to the second chain ester is 1:(0.5 to 4).

In this first more specific embodiment, by adding the first chain ester (i.e. the phosphate ester), the safety performance of the battery is improved; through the combined use of the first chain ester, the second chain ester and the cyclic ester, and through optimization of the ratios of the respective ester solvent components, the compatibility between the phosphate ester and the graphite negative electrode is improved, and the cycle life of the battery is enhanced.

According to a second more specific embodiment, the electrolyte comprises a lithium salt, an additive and an organic solvent, the organic solvent comprises a cyclic ester and a chain ester, the chain ester comprises a phosphate ester and a fluorinated carboxylate ester, the structural formula of the phosphate ester is 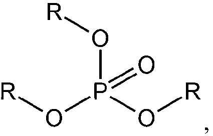 wherein R is selected from a mono-fluoro- or poly-fluoro-substituted saturated or unsaturated aliphatic hydrocarbon, or a mono-fluoro- or poly-fluoro-substituted aromatic hydrocarbon;
the fluorinated carboxylate ester is selected from one or more of fluorinated methyl propionate, fluorinated ethyl propionate and fluorinated ethyl acetate.

In this second more specific embodiment, through the combined use of the cyclic ester, the phosphate ester and the fluorinated carboxylate ester, the room-temperature cycling performance of the battery can be effectively improved, and at the same time the use of the fluorinated carboxylate ester provides a better improvement of the flame-retardant performance of the electrolyte than a non-fluorine-substituted carboxylate ester or a chain carbonate.

According to a third more specific embodiment, the electrolyte comprises a lithium salt, an additive and an organic solvent, the lithium salt is lithium bis(fluorosulfonyl)imide, or a combination of lithium hexafluorophosphate and lithium bis(fluorosulfonyl)imide, the organic solvent comprises a cyclic ester and a chain ester, the chain ester comprises a phosphate ester as well as a chain carbonate and/or a chain carboxylate ester, the structural formula of the phosphate ester is 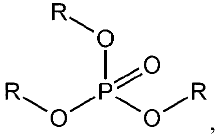 wherein R is selected from a mono-fluoro- or poly-fluoro-substituted saturated or unsaturated aliphatic hydrocarbon, or a mono-fluoro- or poly-fluoro-substituted aromatic hydrocarbon;
the chain carboxylate ester is selected from one or more of methyl propionate, ethyl propionate, propyl propionate, methyl acetate, ethyl acetate, propyl acetate, methyl butyrate, ethyl butyrate, propyl butyrate, fluorinated methyl propionate, fluorinated ethyl propionate and fluorinated ethyl acetate.

In this third more specific embodiment, through the combined use of the cyclic ester, the phosphate ester, and the chain carbonate and/or chain carboxylate ester, together with the optimization of the lithium salt, the battery is provided with relatively good room-temperature cycling performance and rate performance while having better flame-retardant performance.

A second aspect of the present invention provides a lithium-ion battery, comprising a positive electrode, a negative electrode, a separator and an electrolyte, wherein the electrolyte is the above electrolyte.

According to some specific embodiments, the active material of the negative electrode is graphite.

According to some specific embodiments, the active material of the positive electrode is a lithium cobalt oxide material.

Owing to the application of the above technical solution, the present invention has the following advantages over the prior art:
By optimizing the solvent system of the electrolyte, the present invention improves the compatibility between the phosphate ester solvent and the graphite negative electrode, thereby improving the cycle life of the battery.

### Detailed Description of Exemplary Embodiments

The present invention is further described below in conjunction with examples. However, the present invention is not limited to the following examples. The implementation conditions adopted in the examples may be further adjusted according to different specific requirements, and implementation conditions not specified are conventional conditions in the industry. The technical features involved in the various embodiments of the present invention may be combined with one another as long as they do not conflict with one another.

Unless otherwise specified, in the specific examples or comparative examples of the present invention, the raw materials used are all commercially available products or may be prepared in-house by conventional methods.
Compound 1 is 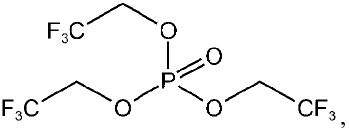 tris(2,2,2-trifluoroethyl) phosphate, CAS No.: 358-63-4;
Compound 2 is 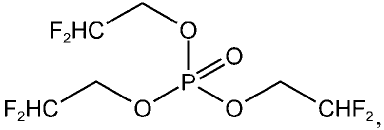 tris(2,2-difluoroethyl) phosphate, CAS No.: 358-64-5;
Compound 3 is 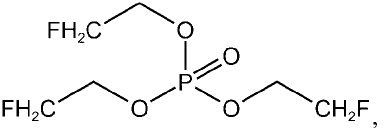 tris(2-fluoroethyl) phosphate, CAS No.: 358-65-6;
Compound 4 is 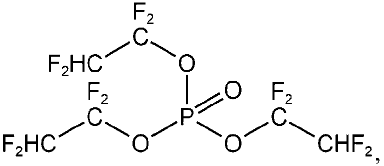 tris(1,1,2,2-tetrafluoroethyl) phosphate, CAS No.: 1268855-78-2, prepared in-house by the following method: To 170 mL of anhydrous acetonitrile were added, in sequence, trimethyl phosphate (28 g, 0.2 mol) and NaI (89.9 g, 0.6 mol); the reaction mixture was heated to 85 °C under reflux, and 1-chloro-1,1,2,2-tetrafluoroethane (218.4 g, 1.6 mol) was continuously and slowly fed in through a dip tube over a feeding time of 60 to 72 h. After the reaction was complete, the mixture was cooled to room temperature and diluted with diethyl ether (1600 mL). The organic phase was washed with deionized water (2×500 mL) and saturated sodium thiosulfate solution (2×500 mL); the organic layer was dried over anhydrous sodium sulfate, and the organic layer was filtered and concentrated. Purification by column chromatography afforded a colorless liquid weighing 38.3 g, with a purity of 99.1% and a yield of 48.1%;
Compound 5 is 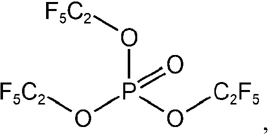 tris(perfluoroethyl) phosphate, CAS No.: 447411-37-2, prepared in-house by the following method: To 170 mL of anhydrous acetonitrile were added, in sequence, a solution of trimethyl phosphate (28 g, 0.2 mol) and NaI (89.9 g, 0.6 mol); the reaction mixture was heated to 85 °C under reflux, and 1-chloro-1,1,2,2,2-pentafluoroethane (247.2 g, 1.6 mol) was continuously and slowly fed in through a dip tube over a feeding time of 72 to 80 h. After the reaction was complete, the mixture was cooled to room temperature and diluted with diethyl ether (1600 mL). The organic phase was washed with deionized water (2×500 mL) and saturated sodium thiosulfate solution (2×500 mL); the organic layer was dried over anhydrous sodium sulfate, and the organic layer was filtered and concentrated. Purification by column chromatography afforded a colorless liquid weighing 44.8 g, with a purity of 99.2% and a yield of 49.6%.

Unless otherwise specified, the "%" in the following examples and comparative examples denotes mass percentage.

### Comparative Example 1

In a nitrogen-filled glove box (H₂O < 10 ppm, O₂ < 10 ppm), 1 equivalent of LiPF₆ was weighed and dissolved in Compound 1 to prepare an electrolyte containing 1 mol/L LiPF₆. Finally, 10% FEC (fluoroethylene carbonate) was added to the electrolyte to prepare the target electrolyte.

### Comparative Example 2

In a nitrogen-filled glove box (H₂O < 10 ppm, O₂ < 10 ppm), 1 equivalent of LiPF₆ was weighed and dissolved in Compound 1 to prepare an electrolyte containing 1 mol/L LiPF₆. Finally, 10% FEC and 0.5% VC were added to the electrolyte to prepare the target electrolyte.

### Comparative Example 3

In a nitrogen-filled glove box (H₂O < 10 ppm, O₂ < 10 ppm), 1 equivalent of LiPF₆ was weighed and dissolved in Compound 1 to prepare an electrolyte containing 1 mol/L LiPF₆. Finally, 10% FEC, 1% PDO (3-phenyl-1,4,2-dioxazol-5-one) and 0.5% VC were added to the electrolyte to prepare the target electrolyte.

### Comparative Example 4

In a nitrogen-filled glove box (H₂O < 10 ppm, O₂ < 10 ppm), 1 equivalent of LiPF₆ was weighed and dissolved in Compound 1 to prepare an electrolyte containing 1 mol/L LiFSI. Finally, 10% FEC was added to the electrolyte to prepare the target electrolyte.

### Comparative Example 5

In a nitrogen-filled glove box (H₂O < 10 ppm, O₂ < 10 ppm), 1 equivalent of LiPF₆ was weighed and dissolved in Compound 1 to prepare an electrolyte containing 1 mol/L LiFSI. Finally, 10% FEC and 0.5% VC were added to the electrolyte to prepare the target electrolyte.

### Comparative Example 6

In a nitrogen-filled glove box (H₂O < 10 ppm, O₂ < 10 ppm), 1 equivalent of LiPF₆ was weighed and dissolved in Compound 1 to prepare an electrolyte containing 1 mol/L LiFSI. Finally, 10% FEC, 1% PDO and 0.5% VC were added to the electrolyte to prepare the target electrolyte.

### Comparative Example 7

In a nitrogen-filled glove box (H₂O < 10 ppm, O₂ < 10 ppm), EC and EMC were mixed uniformly at a molar ratio of 1:3 to prepare a mixed solvent. Then, 1 equivalent of LiPF₆ was weighed and dissolved in the foregoing mixed solvent to prepare an electrolyte containing 1 mol/L LiPF₆, i.e., the target electrolyte was prepared.

### Example 1

In a nitrogen-filled glove box (H₂O < 10 ppm, O₂ < 10 ppm), Compound 1 and EP were mixed uniformly at a molar ratio of 3:1 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 2

In a nitrogen-filled glove box (H₂O < 10 ppm, O₂ < 10 ppm), Compound 1 and EMC were mixed uniformly at a molar ratio of 3:1 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 3

In a nitrogen-filled glove box (H₂O < 10 ppm, O₂ < 10 ppm), Compound 1 and DFEA were mixed uniformly at a molar ratio of 3:1 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 4

In a nitrogen-filled glove box (H₂O < 10 ppm, O₂ < 10 ppm), Compound 1 and EA were mixed uniformly at a molar ratio of 3:1 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 5

In a nitrogen-filled glove box (H₂O < 10 ppm, O₂ < 10 ppm), Compound 1 and EP were mixed uniformly at a molar ratio of 1:3 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 6

In a nitrogen-filled glove box (H₂O < 10 ppm, O₂ < 10 ppm), Compound 1 and EMC were mixed uniformly at a molar ratio of 1:3 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 7

In a nitrogen-filled glove box (H₂O < 10 ppm, O₂ < 10 ppm), Compound 1 and EA were mixed uniformly at a molar ratio of 1:3 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 8

In a nitrogen-filled glove box (H₂O < 10 ppm, O₂ < 10 ppm), Compound 1 and DFEA were mixed uniformly at a molar ratio of 1:3 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 9

In a nitrogen-filled glove box (H₂O < 10 ppm, O₂ < 10 ppm), Compound 2 and EP were mixed uniformly at a molar ratio of 1:3 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 10

In a nitrogen-filled glove box (H₂O < 10 ppm, O₂ < 10 ppm), Compound 2 and EMC were mixed uniformly at a molar ratio of 1:3 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 11

In a nitrogen-filled glove box (H₂O < 10 ppm, O₂ < 10 ppm), Compound 2 and DFEA were mixed uniformly at a molar ratio of 1:3 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 12

In a nitrogen-filled glove box (H₂O < 10 ppm, O₂ < 10 ppm), Compound 2 and EA were mixed uniformly at a molar ratio of 1:3 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 13

In a nitrogen-filled glove box (H₂O < 10 ppm, O₂ < 10 ppm), Compound 3 and EP were mixed uniformly at a molar ratio of 1:3 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 14

In a nitrogen-filled glove box (H₂O < 10 ppm, O₂ < 10 ppm), Compound 3 and EMC were mixed uniformly at a molar ratio of 1:3 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 15

In a nitrogen-filled glove box (H₂O < 10 ppm, O₂ < 10 ppm), Compound 3 and DFEA were mixed uniformly at a molar ratio of 1:3 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 16

In a nitrogen-filled glove box (H₂O < 10 ppm, O₂ < 10 ppm), Compound 3 and EA were mixed uniformly at a molar ratio of 1:3 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 17

In a nitrogen-filled glove box (H₂O < 10 ppm, O₂ < 10 ppm), Compound 4 and EP were mixed uniformly at a molar ratio of 1:3 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 18

In a nitrogen-filled glove box (H₂O < 10 ppm, O₂ < 10 ppm), Compound 4 and EMC were mixed uniformly at a molar ratio of 1:3 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 19

In a nitrogen-filled glove box (H₂O < 10 ppm, O₂ < 10 ppm), Compound 4 and DFEA were mixed uniformly at a molar ratio of 1:3 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 20

In a nitrogen-filled glove box (H₂O < 10 ppm, O₂ < 10 ppm), Compound 4 and EA were mixed uniformly at a molar ratio of 1:3 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 21

In a nitrogen-filled glove box (H₂O < 10 ppm, O₂ < 10 ppm), Compound 5 and EP were mixed uniformly at a molar ratio of 1:3 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 22

In a nitrogen-filled glove box (H₂O < 10 ppm, O₂ < 10 ppm), Compound 5 and EMC were mixed uniformly at a molar ratio of 1:3 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 23

In a nitrogen-filled glove box (H₂O < 10 ppm, O₂ < 10 ppm), Compound 5 and DFEA were mixed uniformly at a molar ratio of 1:3 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 24

In a nitrogen-filled glove box (H₂O < 10 ppm, O₂ < 10 ppm), Compound 5 and EA were mixed uniformly at a molar ratio of 1:3 to prepare a mixed solvent. Then, 1 equivalent of LiPF₆ was weighed and dissolved in the foregoing mixed solvent to prepare an electrolyte containing 1 mol/L LiPF₆. Finally, 10% FEC and 0.5% VC were added to the electrolyte to prepare the target electrolyte.

### Example 25

In a nitrogen-filled glove box (H₂O < 10 ppm, O₂ < 10 ppm), Compound 1 and EMC were mixed uniformly at a molar ratio of 1:3 to prepare a mixed solvent. Then, 1 equivalent of LiTFSI was weighed and dissolved in the foregoing mixed solvent to prepare an electrolyte containing 1 mol/L LiTFSI. Finally, 10% FEC and 0.5% VC were added to the electrolyte to prepare the target electrolyte.

### Example 26

In a nitrogen-filled glove box (H₂O < 10 ppm, O₂ < 10 ppm), Compound 1 and EMC were mixed uniformly at a molar ratio of 1:3 to prepare a mixed solvent. Then, 1 equivalent of LiODFB was weighed and dissolved in the foregoing mixed solvent to prepare an electrolyte containing 1 mol/L LiODFB. Finally, 10% FEC and 0.5% VC were added to the electrolyte to prepare the target electrolyte.

### Example 27

In a nitrogen-filled glove box (H₂O < 10 ppm, O₂ < 10 ppm), Compound 1 and EMC were mixed uniformly at a molar ratio of 1:3 to prepare a mixed solvent. Then, 1 equivalent of LiFSI was weighed and dissolved in the foregoing mixed solvent to prepare an electrolyte containing 1 mol/L LiFSI. Finally, 10% FEC and 0.5% VC were added to the electrolyte to prepare the target electrolyte.

### Example 28

In a nitrogen-filled glove box (H₂O < 10 ppm, O₂ < 10 ppm), Compound 1 and EMC were mixed uniformly at a molar ratio of 1:3 to prepare a mixed solvent. Then, 0.5 equivalent of LiPF₆ and 0.5 equivalent of LiFSI were weighed and dissolved in the foregoing mixed solvent to prepare an electrolyte containing 0.5 mol/L LiPF₆ and 0.5 mol/L LiFSI. Finally, 10% FEC and 0.5% VC were added to the electrolyte to prepare the target electrolyte.

### Example 29

In a nitrogen-filled glove box (H₂O < 10 ppm, O₂ < 10 ppm), Compound 1 and DFEA were mixed uniformly at a molar ratio of 1:3 to prepare a mixed solvent. Then, 1 equivalent of LiTFSI was weighed and dissolved in the foregoing mixed solvent to prepare an electrolyte containing 1 mol/L LiTFSI. Finally, 10% FEC and 0.5% VC were added to the electrolyte to prepare the target electrolyte.

### Example 30

In a nitrogen-filled glove box (H₂O < 10 ppm, O₂ < 10 ppm), Compound 1 and DFEA were mixed uniformly at a molar ratio of 1:3 to prepare a mixed solvent. Then, 1 equivalent of LiODFB was weighed and dissolved in the foregoing mixed solvent to prepare an electrolyte containing 1 mol/L LiODFB. Finally, 10% FEC and 0.5% VC were added to the electrolyte to prepare the target electrolyte.

### Example 31

In a nitrogen-filled glove box (H₂O < 10 ppm, O₂ < 10 ppm), Compound 1 and DFEA were mixed uniformly at a molar ratio of 1:3 to prepare a mixed solvent. Then, 1 equivalent of LiFSI was weighed and dissolved in the foregoing mixed solvent to prepare an electrolyte containing 1 mol/L LiFSI. Finally, 10% FEC and 0.5% VC were added to the electrolyte to prepare the target electrolyte.

### Example 32

In a nitrogen-filled glove box (H₂O < 10 ppm, O₂ < 10 ppm), Compound 1 and DFEA were mixed uniformly at a molar ratio of 1:3 to prepare a mixed solvent. Then, 0.5 equivalent of LiPF₆ and 0.5 equivalent of LiFSI were weighed and dissolved in the foregoing mixed solvent to prepare an electrolyte containing 0.5 mol/L LiPF₆ and 0.5 mol/L LiFSI. Finally, 10% FEC and 0.5% VC were added to the electrolyte to prepare the target electrolyte.

### Performance testing:

(1) The above electrolyte was assembled with a positive electrode, a negative electrode and a separator into a battery, in which the positive-electrode active material was lithium cobalt oxide and the negative-electrode active material was graphite, and the battery was assembled with reference to the prior art. The assembled battery was subjected to a basic performance test and a battery performance test, the test methods being as follows: a 4.2 V lithium cobalt oxide || graphite pouch cell was subjected to a 1 C-rate cycling test at room temperature (25 °C), with charge and discharge cut-off voltages of 2.75 V and 4.2 V, respectively, and 1 C-rate cycling was carried out until the capacity decayed to 80% of the initial capacity; the number of cycles at this point was taken as the cycle life of the battery, as shown in Table 1.

**Table 1 Cycle life of the above 4.2 V lithium cobalt oxide || graphite battery at room temperature under 1.0 C**

| | **Phosphate ester** | | | | | **Linear ester** | | | | **Cyclicest er** | | **Additive** | | **Lithium salt** | | | **1C cycle life** |
|---|---|---|---|---|---|---|---|---|---|---|---|---|---|---|---|---|---|
| | **Compound 1** | **Compound 2** | **C o m p o u n d 3** | **C o m p o u n d 4** | **C o m p o u n d 5** | **P** | **M C** | **E E D E F E A** | **A** | **E C** | **F E C** | **V C** | **P D O** | **Li PF 6** | **Li OD FB** | **Li FS I** | |
| Comparative Example 1 | O | | | | | | | | | | O | | | O | | | 20 |
| Comparative Example 2 | O | | | | | | | | | | O | O | | O | | | 98 |
| Comparative Example 3 | O | | | | | | | | | | O | O | O | O | | | 101 |
| Comparative Example 4 | O | | | | | | | | | | O | | | | | O | 18 |
| Comparative Example 5 | O | | | | | | | | | | O | O | | | | O | 87 |
| Comparative Example 6 | O | | | | | | | | | | O | O | O | | | O | 100 |
| Comparative Example 7 | | | | | | | O | | | O | | | | O | | | 802 |
| Example 1 | √ | | | | | √ | | | | | O | O | | O | | | 852 |
| Example 2 | √ | | | | | | √ | | | | O | O | | O | | | 860 |
| Example 3 | √ | | | | | | | √ | | | O | O | | O | | | 870 |
| Example 4 | √ | | | | | | | | √ | | O | O | | O | | | 866 |
| Example 5 | O | | | | | O | | | | | O | O | | O | | | 1903 |
| Example 6 | O | | | | | | O | | | | O | O | | O | | | 1822 |
| Example 7 | O | | | | | | | | O | | O | O | | O | | | 1842 |
| Example 8 | O | | | | | | | O | | | O | O | | O | | | 2009 |
| Example 9 | | O | | | | O | | | | | O | O | | O | | | 1850 |
| Example 10 | | O | | | | | O | | | | O | O | | O | | | 1780 |
| Example 11 | | O | | | | | | O | | | O | O | | O | | | 1950 |
| Example 13 | | | O | | | O | | | | | O | O | | O | | | 2000 |
| Example 14 | | | O | | | | O | | | | O | O | | O | | | 1930 |
| Example 15 | | | O | | | | | O | | | O | O | | O | | | 2200 |
| Example 17 | | | | O | | O | | | | | O | O | | O | | | 1700 |
| Example 18 | | | | O | | | O | | | | O | O | | O | | | 1740 |
| Example 19 | | | | O | | | | O | | | O | O | | O | | | 1870 |
| Example 21 | | | | | O | O | | | | | O | O | | O | | | 1830 |
| Example 22 | | | | | O | | O | | | | O | O | | O | | | 1730 |
| Example 23 | | | | | O | | | O | | | O | O | | O | | | 1930 |
| Example 27 | O | | | | | | O | | | | O | O | | | | O | 1473 |
| Example 28 | O | | | | | | O | | | | O | O | | O | | O | 2118 |
| Example 30 | O | | | | | | | O | | | O | O | | | O | | 1270 |
| Example 31 | O | | | | | | | O | | | O | O | | | | O | 1670 |
| Example 32 | O | | | | | | | O | | | O | O | | O | | O | 2351 |

As can be seen from Table 1, Comparative Examples 1 to 6 each include only a phosphate ester solvent and a cyclic carbonate solvent, and contain no linear ester (one or more of a chain carbonate, a chain carboxylate ester and a fluorinated carboxylate ester). In terms of the 1 C room-temperature cycle life of the battery, even when the negative-electrode film-forming additive VC and/or PDO, or different lithium salts, were used, the cycle life was only about 100 cycles or less, far less than that of an electrolyte using a conventional carbonate solvent (Comparative Example 7). It can be seen that, in the absence of a linear ester, the electrolytes of Comparative Examples 1 to 6 have poor compatibility with the graphite negative electrode in the cell. Comparative Example 7 is a conventional carbonate electrolyte comprising EC and EMC solvents and the LiPF₆ lithium salt; without the addition of any other additive, the room-temperature cycle life of the battery is about 800 cycles, which is consistent with the initial design of the pouch cell.

The applicant further optimized the solvent system, and improved the performance of the battery by adjusting the solvent components and their contents. In Examples 1 to 4, on the basis of Comparative Example 2, a certain amount of linear ester was added and the molar ratio of the phosphate ester to the linear ester was controlled at 3:1; in terms of cycle life, all were improved, reaching or slightly exceeding the level of Comparative Example 7. In Examples 5 to 8, the applicant further adjusted the molar ratio of the phosphate ester to the linear ester to 1:3, and the cycle life of the battery was significantly improved, reaching more than 1800 cycles. In Examples 9 to 23, the applicant adjusted the phosphate ester solvent, and the cycle life of the battery reached more than 1700 cycles, up to a maximum of 2200 cycles. In Examples 27 to 32, the applicant adjusted the lithium salt, and the cycle life of the battery reached more than 1200 cycles, up to a maximum of more than 2300 cycles. Moreover, by comparing the influence of different linear esters on cycle life, it was found that DFEA was superior to EA, and EA was superior to EMC and EP. By comparing the influence of Compounds 1 to 5 on cycle life, it was found that Compound 3 had the best effect.

In summary, an electrolyte using a phosphate ester as the sole solvent, or only in combination with a cyclic carbonate, has poor compatibility with the graphite negative electrode. In the case where a phosphate ester is used as the main solvent, selecting a linear ester as the second solvent can effectively improve the compatibility of the electrolyte with graphite; however, when the molar ratio of the phosphate ester to the linear ester is too large (for example 3:1), the cycle life of the battery decreases.

### (2) Self-extinguishing time

The present invention examines the safety performance of the relevant electrolyte by means of the self-extinguishing time of the electrolyte. Generally, a self-extinguishing time of less than 5 seconds indicates good safety performance; the longer the self-extinguishing time, the less safe the electrolyte. The test method for the self-extinguishing time is as follows: 5 mL of electrolyte was taken and ignited on a propane flame for 10 seconds, and the corresponding time from the start of burning to extinguishment was recorded as the self-extinguishing time, as shown in Table 2.

**Table 2 Self-extinguishing time of the electrolytes**

| | **Phosphate ester** | | | | | **Linear ester** | | | | **Cy cli c est er** | | **A d d i t i V e V C** | **Lithium salt** | | | | **Self-exti ngui shin g time (s)** |
|---|---|---|---|---|---|---|---|---|---|---|---|---|---|---|---|---|---|
| | **C o m p o u n d 1** | **C o m p o u n d 2** | **C o m p o u n d 3** | **C o m p o u n d 4** | **C o m p o u n d 5** | **E P** | **E M C** | **D F** | **E A** | **E** | **F E C** | | **LiP F₆** | **Li T F SI** | **LiO DF B** | **Li FS I** | |
| Comparative Example 2 | O | | | | | | | | | | O | O | O | | | | <1 |
| Comparative Example 7 | | | | | | | O | | | O | | | O | | | | 78.3 |
| Example 1 | √ | | | | | √ | | | | | O | O | O | | | | 12.8 |
| Example 2 | √ | | | | | | √ | | | | O | O | O | | | | 7.9 |
| Example 3 | √ | | | | | | | √ | | | O | O | O | | | | <1 |
| Example 4 | √ | | | | | | | | √ | | O | O | O | | | | 12.6 |
| Example 5 | O | | | | | O | | | | | O | O | O | | | | 68.6 |
| Example 6 | O | | | | | | O | | | | O | O | O | | | | 32.2 |
| Example 7 | O | | | | | | | | O | | O | O | O | | | | 61.8 |
| Example 9 | | O | | | | O | | | | | O | O | O | | | | 67.3 |
| Example 10 | | O | | | | | O | | | | O | O | O | | | | 32.6 |
| Example 12 | | O | | | | | | | O | | O | O | O | | | | 60.1 |
| Example 13 | | | O | | | O | | | | | O | O | O | | | | 60.4 |
| Example 14 | | | O | | | | O | | | | O | O | O | | | | 31.1 |
| Example 16 | | | O | | | | | | O | | O | O | O | | | | 61 |
| Example 17 | | | | O | | O | | | | | O | O | O | | | | 59.2 |
| Example 18 | | | | O | | | O | | | | O | O | O | | | | 30.1 |
| Example 20 | | | | O | | | | | O | | O | O | O | | | | 60.2 |
| Example 21 | | | | | O | O | | | | | O | O | O | | | | 52.3 |
| Example 22 | | | | | O | | O | | | | O | O | O | | | | 28.3 |
| Example 24 | | | | | O | | | | O | | O | O | O | | | | 59.2 |
| Example 25 | O | | | | | | O | | | | O | O | | O | | | 40 |
| Example 26 | O | | | | | | O | | | | O | O | | | O | | 57.2 |
| Example 29 | O | | | | | | | O | | | O | O | | O | | | 13.4 |
| Example 8 | O | | | | | | | O | | | O | O | O | | | | <1 |
| Example 11 | | O | | | | | | O | | | O | O | O | | | | <1 |
| Example 15 | | | O | | | | | O | | | O | O | O | | | | <1 |
| Example 19 | | | | O | | | | O | | | O | O | O | | | | <1 |
| Example 23 | | | | | O | | | O | | | O | O | O | | | | <1 |
| Example 27 | O | | | | | | O | | | | O | O | | | | O | <1 |
| Example 28 | O | | | | | | O | | | | O | O | O | | | O | <1 |
| Example 30 | O | | | | | | | O | | | O | O | | | O | | 7.8 |
| Example 31 | O | | | | | | | O | | | O | O | | | | O | <1 |
| Example 32 | O | | | | | | | O | | | O | O | O | | | O | <1 |

In the above table, both "O" and "√" indicate that the substance is contained; for the phosphate ester and the linear ester, "√" indicates that the molar ratio of the phosphate ester to the linear ester is 3:1, and "O" indicates that the molar ratio of the phosphate ester to the linear ester is 1:3.
EP: ethyl propionate;
EMC: ethyl methyl carbonate;
DFEA: 2,2-difluoroethyl acetate;
EA: ethyl acetate;
EC: ethylene carbonate;
FEC: fluoroethylene carbonate;
VC: ethylene carbonate;
LiPF₆: lithium hexafluorophosphate;
LiTFSI: lithium bis(trifluoromethanesulfonyl)imide;
LiODFB: lithium bis(oxalato)borate;
LiFSI: lithium bis(fluorosulfonyl)imide;
PDO: 3-phenyl-1,4,2-dioxazol-5-one.

Safety performance is equally important for a battery. As can be seen from Table 2 above, when the linear ester is selected from EP, EMC or EA and the lithium salt is solely lithium hexafluorophosphate, the flame-retardant performance of the electrolyte is only slightly better than that of Comparative Example 7, and the self-extinguishing time of the electrolyte is generally above 30 s. Although increasing the proportion of the phosphate ester in the electrolyte can improve the flame-retardant performance of the electrolyte to a certain extent, as the proportion of the phosphate ester in the electrolyte increases, the room-temperature cycling performance of the battery decreases again. Therefore, it is difficult for a battery to have both better flame-retardant performance and better cycling performance simultaneously.

Through in-depth research, the inventors have found that, on the basis of the combined use of the phosphate ester, the linear ester and the cyclic ester, by using DFEA as the linear ester, the battery has higher room-temperature cycling performance while the self-extinguishing time of the electrolyte can be reduced to within 15 s, with better flame-retardant performance.

Alternatively, on the basis of the combined use of the phosphate ester, the linear ester and the cyclic ester, by optimizing the lithium salt and introducing LiFSI into the lithium salt, even when compounded with LiPF₆, the flame-retardant performance of the electrolyte can be improved, the self-extinguishing time of the electrolyte can be reduced to within 10 s, and the flame-retardant performance of the electrolyte is better. In addition, the compounding of LiFSI and LiPF₆ makes the cycling performance of the battery better.

The present invention has been described in detail above, the purpose of which is to enable those skilled in this field to understand the content of the present invention and to implement it, and this should not be taken as limiting the scope of protection of the present invention; any equivalent changes or modifications made in accordance with the spirit and substance of the present invention shall all be encompassed within the scope of protection of the present invention.

## Claims

1. An electrolyte, comprising a lithium salt, an additive and an organic solvent, wherein the organic solvent comprises a cyclic ester and a chain ester, and the mass proportion of the chain ester in the electrolyte is greater than that of the cyclic ester;
the chain ester comprises a phosphate ester and a linear ester;
the structural formula of the phosphate ester is 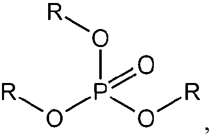
wherein R is selected from a mono-fluoro- or poly-fluoro-substituted saturated or unsaturated aliphatic hydrocarbon, or a mono-fluoro- or poly-fluoro-substituted aromatic hydrocarbon;
the linear ester is one or more of a chain carbonate, a chain carboxylate ester and a fluorinated carboxylate ester.

2. The electrolyte according to claim 1, wherein R is selected from a mono-fluoro- or poly-fluoro-substituted saturated aliphatic hydrocarbon having 1 to 8 carbon atoms.

3. The electrolyte according to claim 1, wherein the phosphate ester is selected from one or more of

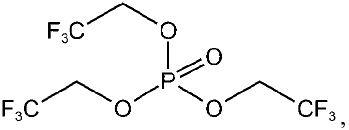

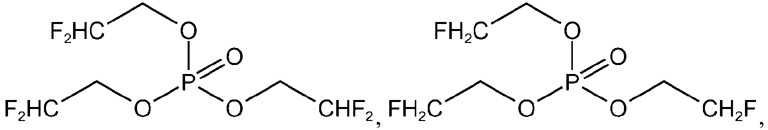

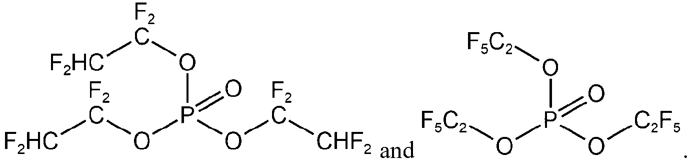

4. The electrolyte according to claim 1, wherein the chain carboxylate ester is selected from one or more of methyl propionate, ethyl propionate, propyl propionate, methyl acetate, ethyl acetate, propyl acetate, methyl butyrate, ethyl butyrate and propyl butyrate; the chain carbonate is selected from one or more of dimethyl carbonate, ethyl methyl carbonate, diethyl carbonate and methyl propyl carbonate; the fluorinated carboxylate ester is selected from one or more of fluorinated methyl propionate, fluorinated ethyl propionate and fluorinated ethyl acetate.

5. The electrolyte according to claim 4, wherein the fluorinated carboxylate ester is 2,2-difluoroethyl acetate.

6. The electrolyte according to claim 1, wherein the cyclic ester is selected from one or more of γ-butyrolactone, ethylene carbonate, propylene carbonate and fluoroethylene carbonate.

7. The electrolyte according to claim 1, wherein the molar ratio of the phosphate ester to the linear ester is 3:(1 to 12).

8. The electrolyte according to claim 1, wherein the molar ratio of the phosphate ester to the linear ester is 1:(0.5 to 4).

9. The electrolyte according to claim 8, wherein the molar ratio of the phosphate ester to the linear ester is 1:(2 to 4).

10. The electrolyte according to claim 1, wherein the cyclic ester accounts for 5 to 20% of the total mass of the electrolyte.

11. The electrolyte according to claim 1, wherein the lithium salt comprises one or more of lithium hexafluorophosphate, lithium tetrafluoroborate, lithium hexafluoroarsenate, anhydrous lithium perchlorate, lithium bis(trifluoromethanesulfonyl)imide, lithium difluorobis(oxalato)phosphate, lithium difluorophosphate, lithium trifluoromethanesulfonate, lithium difluorobis(oxalato)phosphate, lithium bis(oxalato)borate, lithium difluoro(oxalato)borate and lithium bis(fluorosulfonyl)imide; and/or,
the concentration of the lithium salt in the electrolyte is 0.6 to 1.8 mol/L.

12. The electrolyte according to claim 11, wherein the lithium salt is lithium hexafluorophosphate, or lithium bis(fluorosulfonyl)imide, or a combination of lithium hexafluorophosphate and lithium bis(fluorosulfonyl)imide.

13. The electrolyte according to claim 1, wherein the additive comprises one or more of 3-phenyl-1,4,2-dioxazol-5-one, vinylene carbonate, 1,3-propane sultone, prop-1-ene-1,3-sultone, ethylene sulfate, propylene sulfate, 1,4-butane sultone and lithium difluorophosphate; and/or,
the additive accounts for 0.1 to 2% of the total mass of the electrolyte.

14. A lithium-ion battery, comprising a positive electrode, a negative electrode, a separator and an electrolyte, wherein the electrolyte is the electrolyte according to any one of claims 1 to 13.

15. The lithium-ion battery according to claim 14, wherein the active material of the negative electrode is graphite, and the active material of the positive electrode is a lithium cobalt oxide material.
